# Europäisches Patentamt

## European Patent Office

## Office européen des brevets

(11) Veröffentlichungsnummer: **0 078 435**
**B1**

(12) # EUROPÄISCHE PATENTSCHRIFT

(19)

(45) Veröffentlichungstag der Patentschrift:
05.02.86

(21) Anmeldenummer: **82109585.8**

(22) Anmeldetag: **16.10.82**

(51) Int. Cl.⁴: **G 01 N 30/60, B 01 D 15/08**

(54) Säuleneinspannvorrichtung für die Chromatographie.

(30) Priorität: **30.10.81 DE 3143075**

(43) Veröffentlichungstag der Anmeldung:
**11.05.83 Patentblatt 83/19**

(45) Bekanntmachung des Hinweises auf die Patenterteilung:
**05.02.86 Patentblatt 86/6**

(84) Benannte Vertragsstaaten:
**BE CH DE FR GB IT LI NL SE**

(56) Entgegenhaltungen:
**EP - A - 0 041 608**
**DE - B - 1 498 671**
**US - A - 3 682 315**

(73) Patentinhaber: **Merck Patent Gesellschaft mit beschränkter Haftung, Frankfurter Strasse 250, D-6100 Darmstadt (DE)**

(72) Erfinder: **Sättler, Günther, Scribastrasse 15, D-6107 Reinheim 1 (DE)**
Erfinder: **Gunkel, Werner, Wingertsweg 33, D-6101 Rossdorf 2 (DE)**
Erfinder: **Witzgall, Manfred, Niebergallweg 30, D-6100 Darmstadt (DE)**
Erfinder: **Look, Reinhard, Göthsbachstrasse 11, D-6100 Darmstadt (DE)**

**Beschreibung**

Die Erfindung betrifft eine Vorrichtung Zum Einspannen und schnellen Wechseln von Säulen für die Flüssigkeitschromatographie, wobei eine totvolumenfreie Verbindung von Säule und Anschlußstücken, die Zu- und Abführungen für das Laufmittel enthalten, durch Zusammenwirken von Dichtelementen der Säule und der Anschlußstücke erfolgt.

Mit ausschlaggebend für qualitativ gute chromatographische Trennungen ist eine totvolumenfreie Verbindung zwischen der - auswechselbaren - Trennsäule und den geräteseitig, d.h. stationär vorhandenen Zu- und Abführungen für das Laufmittel. Diese Verbindung sollte einerseits leicht lösbar sein, damit einfach und schnell ein Säulenwechsel stattfinden kann, sollte aber andererseits garantieren, daß auch nach oftmaligem Lösen und Zusammenfügen der Verbindung die Dichtigkeit und Totvolumenfreiheit gewahrt bleibt.

Bisher wurde diese Aufgabe so gelöst, daß die Kapillaren für die Laufmittelzu- und -abführung unter Verwendung von Schneid- bzw. Klemmringen aus Metall oder Kunststoff mit Druckschrauben an die eigentliche Säule angeschraubt wurden. Zur Reduzierung des Säulenquerschnitts auf den Querschnitt der Kapillarleitung sind die Säulen in der Regel beidseits mit Reduzierverschraubungen verschlossen, die auf die Säule geschraubt oder mit Schneidringverschraubungen aufgeklemmt werden.

Eine Variante dieser Lösung besteht darin, daß die Säule als eine beidseits mit einem Filtermedium verschlossene Kartusche ausgeführt wird. Diese wird in ein Rohr mit beidseitigen Reduzierverschraubungen und Anschlußverschraubungen für die Kapillaren eingespannt. Vorteil dieser Konstruktion ist es, daß bei einem erforderlichen Säulenwechsel nur die das Sorbens enthaltende Kartusche ausgetauscht werden muß, wogegen die komplizierten und teuren Reduzierverschraubungen immer wieder benutzt werden können. Beim Kartuschenwechsel muß zumindest einseitig vor dem Abschrauben der Reduzierverschraubung zu, nächst die Kapillarleitung entfernt werden. Eine ähnliche Vorrichtung ist aus der US-A 3 682 315 bekannt.

Alle diese Lösungen haben den Nachteil, daß die für eine gute Trennleistung der Säule wesentlichen Anschlußverbindungen durch manuelles Verschrauben hergestellt werden. Dabei besteht immer die Gefahr, daß entweder durch zu leichtes Anziehen keine vollständige Abdichtung erzielt wird oder durch zu festes Anziehen die Dichtelemente beschädigt werden. Ein schneller, sicherer Säulenwechsel auch durch nicht geübtes Personal ist damit nicht möglich. Auch ein automatisierter Säulenwechsel ist dabei kaum möglich.

Es bestand daher die Aufgabe, eine Einspannvorrichtung zu finden, die einen schnellen, gegebenenfalls auch automatisierbaren Säulenwechsel gestattet und die trotzdem eine verbesserte Sicherheit der Abdichtung gewährleistet.

Diese Aufgabe wurde durch die vorliegende Erfindung gelöst.

Gegenstand der Erfindung ist daher eine Vorrichtung zum Einspannen und schnellen Wechseln von Säulen für die Flüssigkeitschromatographie gemäß Anspruch 1.

Das erfindungsgemäße Prinzip kann in unterschiedlicher Weise, abgestimmt auf spezielle Anforderungen, realisiert werden. In den Zeichnungen sind einige bevorzugte Ausgestaltungsmöglichkeiten dargestellt.

Figur 1 zeigt eine Aufsicht auf eine schematisiert dargestellte erfindungsgemäße Vorrichtung.

Figur 2 zeigt eine Seitenansicht der gleichen Vorrichtung.

Figur 3 zeigt einen Schnitt durch eine Ausführungsform eines Spann- und Dichtelementes in Verbindung mit einer Kartusche.

Figur 4 zeigt einen Schnitt durch eine Ausführungsform eines Spann- und Dichtelementes in Verbindung mit einer Säule mit Reduzierverschraubung.

Figur 5 zeigt einen Schnitt durch eine Ausführungsform eines Spann- und Dichtelementes in Verbindung mit einer Säule mit komprimierbarer Packung.

Figur 6 zeigt einen Schnitt durch eine Ausführungsform eines Spann- und Dichtelementes in Verbindung mit einer Säule mit komprimierbarer Packung und Membranabdichtung.

Figur 7 zeigt ein Beispiel einer automatisierbaren Anwendung der erfindungsgemäßen Einspannvorrichtung in Verbindung mit einer Säulenwechselvorrichtung.

In den Zeichnungen ist mit 1 eine Trägerplatte bezeichnet, mit 2 die Säule und mit 3 das untere Spann- und Dichtelement. 4 ist ein Lager, 5 das obere Spann- und Dichtelement und 6 ein Druckelement mit dem Stempel 7. Mit 8 ist ein Zentrierstück bezeichnet, g und 10 sind Kapillaren für die Laufmittelzu- und -abführung. 11 ist ein speziell für den Anschluß einer Kartusche gestalteter Dichtkegel, 12 die Säulenfüllung. 13 ist ein Dichtring mit eingepreßter Fritte 14, der mit einer aufgeklebten oder aufgepreßten Kappe 15 am Kartuschenende befestigt ist. Mit 16 ist eine Fritte und mit 17 ein Dichtring bezeichnet, die in eine Reduzierverschraubung 18 eingepreßt sind. 19 ist ein speziell auf Säulen mit Reduzierverschraubung angepaßtes Spann- und Dichtelement und 20 der entsprechende Dichtkonus. 21 ist eine Fritte, 22 eine Kugelschüttung und 23 eine Dichtung. 24 ist eine weitere ausführungsform eines Spann- und Dichtelementes. 25 ist eine flexible Membran und 26 eine Klemmkappe. Mit 27 ist ein Druckring zum festhalten der Klemmkappe 26 bezeichnet, mit 28 ein Stempel, mit 29 ein Spannelement und mit 30 ein Federelement. 31 ist ein Drehmagazin, 32 ein Spannund Dichtelement und 33 ein Pneumatikzylinder.

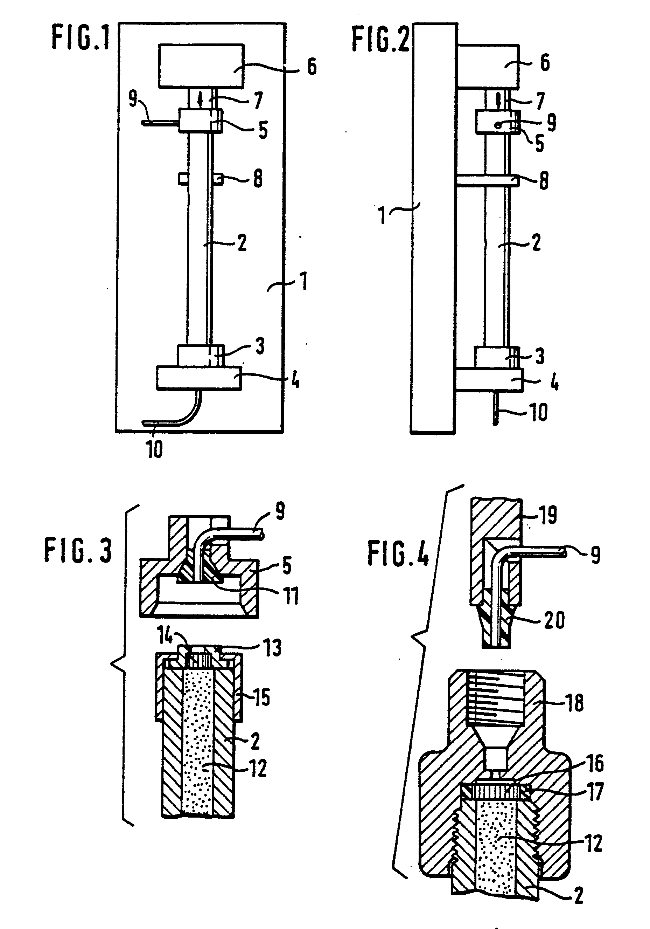

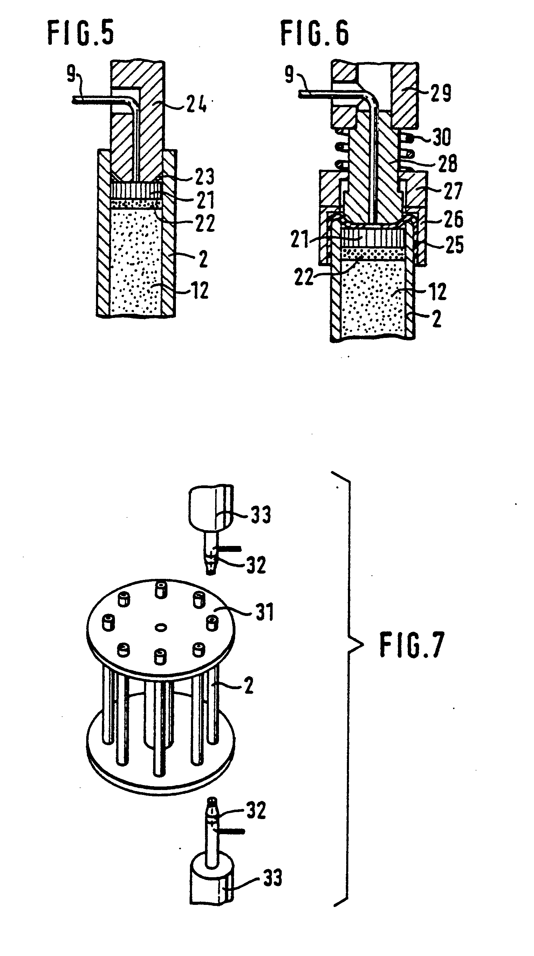

Wie bereits aus den in den Zeichnungen dargestellten Beispielen ersichtlich ist, kann die erfindungsgemäße Vorrichtung in Verbindung mit allen möglichen Säulenkonstruktionen verwendet werden. Zur Anpassung an verschiedene Säulenkonstruktionen muß lediglich der Dichtteil des Spann- und Dichtelementes (5, 19/20, 24, 27/28) auf die Säule abgestimmt sein. Das erfindungsgemäße Prinzip, daß nämlich die Säule ohne Verschrauben zwischen 2 Spannund Dichtelemente eingespannt wird, bleibt davon unberührt. Es können daher sowohl die heute noch überwiegend gebräuchlichen Säulen mit Reduzierverschraubung entsprechend Figur 4 verwendet werden als auch Kartuschensäulen entsprechend Figur 3 oder auch Spezialsäulen für insbesondere präparative Anwendung mit Packungskompression entsprechend den Figuren 5 und 6.

Das Einspannen der Säule erfolgt jeweils mit konstanter, von der Einspannvorrichtung vorgegebener und daher vom Anwender unabhängiger Kraft. Dazu ist ein Druckelement (6) vorgesehen, das über einen Stempel (7) das Spann und Dichtelement (5) auf die Säule (2) drückt, wobei durch ein unteres Lager (4) und ein unteres Spann- und Dichtelement (3) der notwendige Gegendruck erzeugt wird. Der Stempel (7) kann selbstverständlich auch integraler Bestandteil des Spann- und Dichtelementes (5) sein. Als Druckelement (6) kann z. B. ein Federelement dienen, das durch Hebeldruck gespannt wird, z.B. in der Art eines Kniehebelspanners. Auch mit einer auf das Federelement wirkenden Druckschraube kann die erforderliche Spannkraft aufgebracht werden.

Bevorzugt wird als Druckelement (6) jedoch ein Pneuma: tikzylinder verwendet, der durch eine im Labor vorhandene Druckluftleitung oder eine externe Druckgasflasche versorgt werden kann.

Der Arbeitshub, d.h. der Weg, den das obere Spann und Dichtlement (5) beim Einspannen beziehungsweise Entspannen der Säule zurücklegt, sollte mindestens etwa 10 bis 20 mm betragen, so daß in entspanntem Zustand die Säule frei zugänglich ist und ohne Behinderung ausgetauscht werden kann. Zur Anpassung des Freiraumes zwischen dem oberen (5) und unteren Spann- und Dichtelement (3) an unterschiedliche Säulenlängen sollte das untere Lager (4) in der Röhe verstellbar sein. Dabei kann entweder eine kontinuierliche Röhenverstellung vorgesehen werden oder aber verschiedene Raststufen für Säulen in verschiedenen Standardlängen.

Der Einbau einer neuen Säule erfolgt so, daß, gegebenenfalls nach Anpassung der Höhe des unteren Lagers (4) an die Säulenlänge, die Säule in das untere Spann- und Dichtelement (3) eingesetzt wird und nach Ausrichten der Säule (2) mit Hilfe eines Zentrierstücks (8) (z.B. in Form einer V-förmigen Aufnahme) das Druckelement (6) betätigt wird, wodurch das obere Spann- und Dichtelement (5) auf die Säule (2) aufgepreßt wird. Das Auswechseln einer Säule nimmt daher nur wenige Sekunden in Anspruch und kann auch von ungeübtem Personal problemlos ausgeführt werden. Durch den vom Pneumatikzylinder oder der Federkraft vorgegebenen konstanten Anpreßdruck ist dabei gewährleistet, daß die Säule zwar sicher abgedichtet ist, daß aber keine Überbeanspruchung der Dichtelemente erfolgt.

Der Säulenwechsel kann mit der erfindungsgemäßen Vorrichtung auch völlig automatisiert werden. Ein Beispiel einer solchen Einrichtung ist in Figur 7 gezeigt, wobei mehrere Säulen (2) auf ein Drehmagazin (31) montiert sind. Die erfindungsgemäße Einspannvorrichtung hat dabei 2 Druckelemente in Form von Pneumatikzylindern (33), die die Spann- und Dichtelemente (32) bewegen. Durch Betätigen der Pneumatikzylinder wird die Säule (2) daher an beiden Enden freigegeben und es kann durch Drehen des Ständers (31) jede beliebige andere Säule an deren Stelle treten. Selbstverständlich sind auch hier nach entsprechender Anpassung der Spann- und Dichtelemente (32) alle Arten von Säulen verwendbar. Ebenso können an Stelle eines Drehmagazins andere Säulenwechselvorrichtungen eingesetzt werden.

Der Ausdruck 'Säule' ist in der vorliegenden Anmeldung in weitem Sinne zu verstehen. Es sind damit nicht nur die eigentlichen Trennsäulen gemeint, sondern auch Z.B. Vorsäulen, Anreicherungssäulen oder z.B. auch Proberöhrchen, die eine zu trennende Probe enthalten.

Die durch die erfindungsgemäße Einspannvorrichtung ermöglichte Automatisierbarkeit erlaubt es Z.B., Trennungen von unterschiedlichen Substanzproben, die in Proberöhrchen oder auf Anreichungssäulen adsorbiert in einer Säulenwechselvorrichtung entsprechend Figur 7 vorliegen, an einer oder bei Einsatz einer Wechselvorrichtung auch für die Trennsäule an unterschiedlichen Säulen automatisch vorprogrammierbar, z.B. über Nacht ablaufen zu lassen. Durch die Erfindung steht eine wertvolle neue Vorrichtung zur Verfügung, mit der der Anwendungsbereich von flüssigkeitschromatographischen Trennverfahren weiter ausgebaut werden kann.

## Patentansprüche:

1. Vorrichtung zum Einspannen und schnellen Wechseln von Säulen für die Flüssigkeitschromatographie wobei eine totvolumenfreie Verbindung von Säule und Anschlußstücken, die Zu- und Abführungen für das Laufmittel enthalten, durch Zusammenwirkung von Dichtelementen der Säule und der Anschlußstücke erfolgt, dadurch gekennzeichnet, daß ein oberes (5) und ein untere (3) Spann- und Dichtelement mit auf die Säulenkonstruktion abgestimmten Dichtelementen (11, 20, 23, 28) vorgesehen ist wobei zumindest eines dieser Spann- und Dichtelemente (3,5) mit Hilfe eines Druckelementes (6) längs der Säulenachse bewegbar ist, wobei in entspanntem Zustand die Säule in axialer Richtung bewegt und ausgetauscht werden kann und wobei in gespanntem Zustand die Spann- und Dichtelemente (3, 5) unter einem vorgegebenen Druck mit der Säule (2) dichtend zusammenwirken.

2. Vorrichtung nach Anspruch 1, dadurch gekennzeichnet, daß das Druckelement (6) eine Pneumatikzylinder ist.

3. Verwendung der Vorrichtung nach Anspruch 1 in Verbindung mit einer Säulenwechselvorrichtung (31).

**0 078 435**

### Revendications

1. Dispositif pour la fixation et le remplacement rapide de colonnes pour la chromatographie liquide, un assemblage exempt de volume mort entre la colonne et des pièces de raccordement contenant les alimentations et les évacuations pour l'eluant, ayant lieu par la coopération d'éléments d'étancheité de la colonne et des pièces de raccordement, caractérisé en ce qu'on prévoit un élément supérieur de serrage et d'étanchéité (5) et un élément inférieur de serrage et d'étanchéité (3) avec des éléments d'étanchéité (11, 20, 23, 28) déterminés en fonction de la structure de la colonne, au moins un de ces elements de serrage et d'étanchéité (3, 5) pouvant être déplace le long de l'axe de la colonne à l'aide d'un élément de pression (8) tandis que, à l'état relaxé, la colonne peut être déplacée axialement et remplacée alors que, lorsqu'elle est fixée, les éléments de serrage et d'étanchéité (3, 5) coopèrent de manière étanche avec la colonne (2) sous une pression prédéterminée.

2. Dispositif selon la revendication 1, caractérisé en ce que l'élément de pression (6) est un cylindre pneumatique.

3. Utilisation du dispositif selon la revendication 1 en association avec un dispositif de remplacement de colonne (31).


### Claims

1. Device for clamping and rapidly changing columns for liquid chromatography, whereby the column and connectors which are provided with inlets and outlets for the mobile phase are connected without dead volume due to the combined action of the sealing elements of the column and the connectors, characterised in that an upper (5) and a lower (3) clamping and sealing element, having sealing elements (11, 20, 23 and 28) compatible with the design of the column are provided, at least one of these clamping and sealing elements (3,5) being movable along the axis of the column with the aid of a pressure element (6), it being possible for the column in the unclamped state to be moved in an axial direction and exchanged and, in the clamped state, the clamping and sealing elements (3,5), under a pre-set pressure, acting in combination with the column (2) to form a seal.

2. Device according to Claim 1, characterised in that the pressure element (6) is a pneumatic cylinder.

3. use of the evice according to Claim 1 in combination with a device for column changing (31).

4

FIG.1

FIG.2

FIG.3

FIG.4

FIG.5

FIG.6

FIG.7